(19) Europäisches Patentamt
European Patent Office
Office européen des brevets

(11) **EP 3 231 934 B1**

(12) **EUROPEAN PATENT SPECIFICATION**

(45) Date of publication and mention
of the grant of the patent:
**20.11.2024 Bulletin 2024/47**

(21) Application number: **15868004.1**

(22) Date of filing: **08.12.2015**

(51) International Patent Classification (IPC):
***D06M 10/02*** *(2006.01)*

(52) Cooperative Patent Classification (CPC):
**D06M 10/025; D06M 10/02**

(86) International application number:
**PCT/JP2015/084444**

(87) International publication number:
**WO 2016/093250 (16.06.2016 Gazette 2016/24)**

(54) **SURFACE-TREATED CARBON FIBER, SURFACE-TREATED CARBON FIBER STRAND, AND MANUFACTURING METHOD THEREFOR**

OBERFLÄCHENBEHANDELTE KOHLENSTOFFFASER, OBERFLÄCHENBEHANDELTER KOHLENFASERSTRANG UND VERFAHREN ZUR HERSTELLUNG DAVON

FIBRE DE CARBONE TRAITÉE EN SURFACE, BRIN DE FIBRE DE CARBONE TRAITÉE EN SURFACE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2014 JP 2014248906**

(43) Date of publication of application:
**18.10.2017 Bulletin 2017/42**

(73) Proprietors:
• **The University of Tokyo**
 **Tokyo 113-8654 (JP)**
• **Teijin Limited**
 **Osaka-shi, Osaka 530-0005 (JP)**

(72) Inventors:
• **SUZUKI, Takaya**
 **Tokyo 113-8654 (JP)**
• **ZUSHI, Hiroaki**
 **Tokyo 113-8654 (JP)**
• **SAITOU, Noriaki**
 **Tokyo 113-8654 (JP)**

(74) Representative: **Carpmaels & Ransford LLP**
 **One Southampton Row**
 **London WC1B 5HA (GB)**

(56) References cited:
**EP-A1- 2 053 078**    **WO-A1-2014/081015**
**WO-A1-2014/081015**    **WO-A1-2014/142109**
**WO-A1-2014/142109**    **US-A1- 2013 048 485**

## Description

### Technical Field

The present invention relates to a surface-treated carbon fiber obtained by introducing a predetermined functional group into a surface of a carbon fiber, a surface-treated carbon fiber strand obtained by bundling the surface-treated carbon fibers, and a manufacturing method therefor. Specifically, the present invention relates to a surface-treated carbon fiber which has been surface-treated by bringing a reactive gas which has been made into a plasma into contact with a surface of a carbon fiber, a surface-treated carbon fiber strand, and a manufacturing method therefor.

### Background Art

A carbon fiber reinforced composite material (hereinafter, also simply referred to as "composite material") formed of a carbon fiber and a matrix resin is widely used in an aircraft, sports and leisure, and a general industry due to a characteristic such as a light weight, a high strength, or a high elastic modulus. An adhesive interfacial area between a surface of a carbon fiber and a matrix resin in a composite material is very large. Therefore, performance of the composite material varies largely depending on an adhesive state between the carbon fiber and the matrix resin.

Various hypotheses have been proposed and empirical studies have been performed in various papers and the like concerning a strength developing mechanism in a carbon fiber which has become a composite with a matrix resin (Non-Patent Literatures 1 and 2). According to these papers, it is clear that it is a large factor for improving performance of a composite material to modify a surface of a carbon fiber having a low wettability with a matrix resin and to control an adhesive property between the carbon fiber and the matrix resin.

In order to cause a carbon fiber to develop a mechanical property sufficiently by improving an adhesive property between the carbon fiber and a matrix resin, in general, an acidic functional group (hydroxy group, carboxyl group) is introduced into a surface of the carbon fiber by performing a surface treatment step after a carbonization step in a process for manufacturing the carbon fiber.

As the surface treatment, an oxidation treatment is used in many cases. As a method for the oxidation treatment, a wet treatment method such as an electrolytic oxidation method or a chemical liquid oxidation method; and a dry treatment method such as air oxidation, ozone oxidation, or a plasma treatment have been proposed.

In the wet treatment method, quality degradation due to a chemical liquid, an electrolyte material, or the like remaining in a carbon fiber after a surface treatment is concerned. In addition, it is said that an adhesive vulnerable layer called a weak boundary layer (WBL) exists in a carbon fiber which has been subjected to a surface treatment by the wet treatment method. This is a very unstable and brittle layer formed on a surface of a carbon fiber when the carbon fiber is subjected to a wet treatment. Particularly, a carbon fiber forms a graphite structure on a surface thereof. Therefore, the surface is not easily oxidized using a common chemical liquid. Therefore, it is necessary to subject the surface to an electrolytic treatment using a chemical liquid having a strong oxidizing power, or to subject the surface to an electrolytic treatment with a strong electrolytic energy. As a result, WBL is formed on the surface of the carbon fiber, and there is a problem that an adhesive force cannot be improved essentially. In addition, the wet treatment method has a problem of a treatment of a waste chemical liquid or the like. Furthermore, when a carbon fiber has a form of a short fiber, it is difficult to utilize the wet treatment method industrially.

The dry treatment method is a technique based on a surface treatment of a carbon fiber in an oxidizing atmosphere. The dry treatment method has a large advantage that it is not necessary to wash a carbon fiber after a surface treatment, and many methods have been proposed. As the dry treatment method, a gas phase oxidation method using ozone or a plasma is known.

Examples of a gas phase oxidation method using ozone include a method for introducing ozonized air into a chamber having a heater, and bringing the ozonized air into contact with a surface of a carbon fiber in this chamber. Ozone is decomposed very easily, and is decomposed violently particularly at a high temperature. Therefore, gas phase oxidation using ozone is generally performed at a low temperature. However, an oxidation reaction in this case is extremely slow. In order to accelerate the reaction, it is necessary to increase the concentration of ozone. For this purpose, it is necessary to supply ozone excessively, and for example, a reaction efficiency of ozone is lowered disadvantageously. In addition, ozone is extremely harmful to a human body. Therefore, as a method for performing a surface treatment of a carbon fiber, it is difficult to utilize gas phase oxidation using ozone industrially at present.

Examples of a gas phase oxidation method using a plasma include a method for making a reactive gas into a plasma in a chamber at a reduced pressure, and bringing the reactive gas which has been made into a plasma into contact with a surface of a carbon fiber in this chamber. This method is performed in a chamber at a reduced pressure close to vacuum. Therefore, a surface treatment of a carbon fiber cannot be performed continuously, and it is difficult to utilize the method industrially.

In recent years, in order to improve physical properties of a carbon fiber reinforced composite material, it has been required to reduce variation in a mechanical property of a filament and variation in a chemical structure on a surface of a fiber. For example, as described in Patent Literature 1, a method for reducing variation in a surface structure of a carbon fiber by performing an electrolytic treatment a plurality of times has been proposed. Patent Literature 2 proposes a method for reducing variation in a surface structure of a carbon fiber by suppressing temperature fluctuation of an electrolytic solution and suppressing fluctuation of electrolytic treatment time. However, it is very difficult to reduce variation in a surface structure of a carbon fiber even by these methods, and further improvement has been required. Patent Literature 3 describes a method for performing a surface treatment by heating a surface of a carbon fiber in an air atmosphere. However, this is a batch type treatment method, and treatment time is as long as 30 minutes to four hours. Therefore, industrialization thereof is difficult. Patent Literature 4 describes fibers for use in fiber-reinforced resin having an adhered sizing agent. Panted Literature 5 describes a prepreg containing a carbon fiber and a thermosetting resin and either (1) a thermoplastic resin particle or fiber and a conductive particle or fiber are contained, and/or (2) a conductive particle or fiber of which thermoplastic resin nucleus or core is coated with a conductive substance is contained. Patent Literature 6 describes an apparatus and method for enhancing the surface energy and/or surface chemistry of carbon fibers involving exposing the fibers to direct or indirect contact with atmospheric pressure plasma generated using a background gas containing at least some oxygen or other reactive species. Patent literature 7 describes a method whereby deposits which have occurred on the surfaces of a fiber bundle during flameproofing treatment of a carbon fiber-precursor acrylic fiber bundle can be efficiently removed prior to carbonization treatment at high temperature.

**Citation List**

**Non-Patent Literature**

Non-Patent Literature 1: Surface Vol.28, No. 12977-987
Non-Patent Literature 2: Carbon, 26, 389 (1988)

**Patent Literature**

Patent Literature 1: JP 2008-248424 A
Patent Literature 2: JP 2007-224459 A
Patent Literature 3: JP S45-1287 A
Patent literature 4: WO 2014/142109 A1
Patent Literature 5: EP 2053078 A1
Patent Literature 6: US 2013/0048485 A1
Patent Literature 7: WO 2014/0081015 A1

**Summary of Invention**

**Technical Problem**

An object of the present invention is to provide a surface-treated carbon fiber having a high adhesive property with a matrix resin, obtained by selectively introducing a predetermined functional group into a surface of a carbon fiber, a surface-treated carbon fiber strand, and a manufacturing method therefor.

Another object of the present invention is to provide a method for manufacturing a surface-treated carbon fiber using a surface treatment method having no need to wash a carbon fiber after a surface treatment and capable of performing a treatment continuously even when the carbon fiber has a form of a short fiber.

**Solution to Problem**

The present inventors made intensive studies in order to solve the above problems. As a result, the present inventors have found that the above problems can be solved by spraying a reactive gas which has been made into a plasma onto a surface of a carbon fiber at an atmospheric pressure to perform a plasma treatment, and have completed the present invention.

The present invention is as defined in the claims.

**Advantageous Effects of Invention**

The surface-treated carbon fiber of the present invention is subjected to a predetermined plasma surface treatment to be manufactured. Therefore, a hydrophilic functional group such as a carboxyl group, hydroxy group, or a carbonyl group can be introduced into a surface of the carbon fiber at a predetermined ratio. As a result, a wettability with a matrix resin can be higher than that in a conventional wet oxidation method. Therefore, the surface-treated carbon fiber of the present invention manufactured by this surface treatment method can have a high interfacial adhesive property between the carbon fiber and the matrix resin. In addition, an adhesive force between the carbon fiber and the matrix resin can be uniform in a wide range. As a result, a carbon fiber reinforced composite material manufactured using the surface-treated carbon fiber of the present invention can avoid local stress concentration, and can improve physical properties thereof.

The surface-treated carbon fiber of the present invention has a high wettability with a matrix resin. Therefore, the carbon fiber flows and is dispersed with flow of the matrix resin. Therefore, when the carbon fiber is kneaded with the matrix resin, breakage due to direct contact between the carbon fibers can be suppressed. As a result, the surface-treated carbon fiber of the present invention easily holds an expected fiber length, and can improve physical properties of a carbon fiber reinforced composite material manufactured using the surface-treated carbon fiber.

**Brief Description of Drawings**

Fig. 1 is a schematic diagram illustrating an example of a plasma surface treatment apparatus.
Fig. 2 is a schematic diagram illustrating another example of the plasma surface treatment apparatus.
Fig. 3 is a schematic diagram illustrating still another example of the plasma surface treatment apparatus.
Fig. 4 is an explanatory diagram illustrating an example of a process for manufacturing a carbon fiber of the present invention.

**Description of Embodiments**

(1) Surface-treated carbon fiber

A surface-treated carbon fiber of the present invention has a ratio of functional groups formed on a surface of the carbon fiber in a predetermined range.

In the present invention, the ratio of functional groups formed on a surface of the carbon fiber is evaluated with a mole ratio between a carboxyl group and an acid anhydride measured by pyrolysis gas analysis. In the present invention, the mole ratio between a carboxyl group and an acid anhydride measured by pyrolysis gas analysis is from 50:50 to 70:30, and preferably from 53:47 to 68:32. When the ratio of a carboxyl group is less than 50, an adhesive property between the carbon fiber and a matrix resin is poor, and physical properties of a resulting composite material are thereby lowered. When the ratio of a carboxyl group is more than 70, an adhesive property between the carbon fiber and the matrix resin is too strong. Therefore, stress concentration occurs in the carbon fiber, and for example, impact resistance of a resulting composite material is lowered undesirably.

The surface-treated carbon fiber of the present invention has a surface friction force measured by SPM analysis in a predetermined range with respect to a non-surface-treated carbon fiber.

The surface friction force measured by SPM analysis is an index indicating a frictional characteristic of a surface of a carbon fiber. That is, a frictional characteristic of a surface of a carbon fiber is evaluated with a twisting displacement (FFM signal) of a cantilever caused by a friction force between a surface of a sample of a carbon fiber and a probe when the surface of the sample is scanned with the cantilever.

In the surface-treated carbon fiber of the present invention, a surface friction force measured by SPM analysis is preferably from 1.25 to 1.75 times, and more preferably from 1.28 to 1.60 times that of a non-surface-treated carbon fiber. When the above value is less than 1.25 times, an adhesive property is poor due to a small area of an interface between the carbon fiber and a matrix resin, and physical properties of a resulting composite material are thereby lowered easily. When the above value is more than 1.75 times, the carbon fiber is damaged severely, and physical properties of a resulting composite material are thereby lowered easily.

The surface-treated carbon fiber of the present invention preferably has the amount of functional groups formed on a surface of the carbon fiber in a predetermined range.

In the present invention, the amount of functional groups formed on a surface of the carbon fiber is evaluated with a surface oxygen concentration (O/C) indicating an existence ratio of oxygen atoms with respect to carbon atoms on the surface of the carbon fiber, measured with an X-ray photoelectron spectrometer. In the present invention, the surface oxygen concentration (O/C) measured by X-ray photoelectron spectroscopy is from 0.05 to 0.28, preferably from 0.06 to 0.24, and more preferably from 0.07 to 0.18. When the surface oxygen concentration (O/C) is less than 0.05, an adhesive property between the carbon fiber and a matrix resin is poor, and physical properties of a resulting composite material are thereby lowered. When the surface oxygen concentration (O/C) is more than 0.28, an adhesive property between the carbon fiber and the matrix resin is too strong. Therefore, stress concentration occurs in the carbon fiber, and for example, impact resistance of a resulting composite material is lowered undesirably.

The surface-treated carbon fiber of the present invention preferably has an interfacial shear strength between the carbon fiber and a resin in a predetermined range.

The interfacial shear strength is an index indicating an adhesive property between a carbon fiber and a matrix resin.

The interfacial shear strength is measured by a microdroplet method. Specifically, predetermined resin particles (droplets) in an uncured state are attached to a filament. These resin particles are cured to be fixed to the filament. Thereafter, this filament is pulled out from these resin particles. The interfacial shear strength can be calculated from a load required for this case using the following formula (1) $\tau = F/(\pi \times D \times L)$ ···formula (1)

In formula (1), $\tau$ represents an interfacial shear strength, F represents a maximum pull-out load, L represents an embedding length of a filament into resin particles, and D represents a fiber diameter of a filament.

In the surface-treated carbon fiber of the present invention, the interfacial shear strength between the carbon fiber and a resin using an epoxy resin manufactured by WEST SYSTEM Inc. is preferably 50 MPa or more, more preferably 55 MPa or more, and particularly preferably 60 MPa or more. An upper limit value of the interfacial shear strength is not particularly limited, but is generally 90 MPa or less, preferably 85 MPa or less, and more preferably 80 MPa or less. When the interfacial shear strength is less than 50 MPa, an adhesive property between the carbon fiber and a matrix resin is poor, and physical properties of a resulting composite material are lowered easily.

The surface-treated carbon fiber of the present invention may be manufactured using any raw material of a rayon-based carbon fiber, a pitch-based carbon fiber, a polyacrylonitrile (PAN)-based carbon fiber, and the like. A polyacrylonitrile-based carbon fiber is particularly preferable.

(2) Carbon fiber strand

A surface-treated carbon fiber strand of the present invention is obtained by bundling the above 1000 to 100000 surface-treated carbon fiber filaments. A conventionally known sizing method can be used for bundling. Bundling is performed after the surface treatment. The composition of a sizing agent can be changed appropriately according to intended use of the carbon fiber. The sizing agent contains water or a solvent according to a product form. Therefore, after the sizing agent is uniformly attached to the carbon fiber, water or a solvent is preferably dried and removed.

In the surface-treated carbon fiber strand of the present invention, the tensile strength of a resin-impregnated strand is preferably from 2500 to 7000 MPa, and more preferably from 3500 to 7000 MPa. In addition, the tensile elastic modulus is preferably from 160 to 650 GPa, and more preferably from 200 to 600 GPa.

(3) Method for manufacturing surface-treated carbon fiber

The surface-treated carbon fiber of the present invention may be any carbon fiber of a rayon-based carbon fiber, a pitch-based carbon fiber, a polyacrylonitrile (PAN)-based carbon fiber, and the like. Hereinafter, a method for manufacturing a polyacrylonitrile-based surface-treated carbon fiber will be described.

A polyacrylonitrile-based carbon fiber is usually manufactured through the following steps and the like. That is, a flameproof fiber is manufactured by subjecting a PAN-based fiber as a precursor fiber to a flameproofing treatment. Subsequently, the flameproof fiber is carbonized in a carbonization step including two stages of low temperature carbonization and high temperature carbonization or more, and a carbon fiber is manufactured. Thereafter, this carbon fiber is subjected to a plasma surface treatment by a predetermined method, and the surface-treated carbon fiber of the present invention is thereby manufactured. In addition, the surface-treated carbon fiber strand of the present invention is manufactured by bundling the predetermined number of the surface treatment carbon fibers.

<Raw material fiber>

As a raw material fiber, it is possible to use a PAN-based fiber obtained by spinning a spinning solution obtained by homopolymerizing acrylonitrile or copolymerizing a monomer composition containing 90% by mass or more of acrylonitrile, preferably 95% by mass or more of acrylonitrile by a wet or dry spinning method, and then subjecting the resulting product to washing with water, drying, and stretching. As a monomer to be copolymerized, a polar monomer such as methyl acrylate, itaconic acid, methyl methacrylate, methacrylic acid, or acrylic acid is preferable.

The raw material fibers as a precursor fiber of the carbon fiber are bundled to form a precursor fiber strand.

The number of filaments of the precursor fiber strand is preferably from 1,000 to 48,000, and more preferably from 3,000 to 24,000 in view of a manufacturing efficiency.

Note that as the raw material fiber, a known carbon fiber precursor fiber such as a rayon-based fiber or a pitch-based fiber can be used in addition to a PAN-based fiber. A carbon fiber manufactured using a PAN-based fiber exhibits the best physical properties. Therefore, hereinafter, the present invention will be described using a PAN-based fiber as an example. Note that a precursor fiber other than a PAN-based fiber can be also handled in a similar manner to the PAN-based fiber.

<Flameproofing>

A flameproofing treatment is performed by oxidizing the PAN-based fiber as a precursor fiber in heated air at 200 to 300°C for 10 to 100 minutes. The flameproofing treatment causes an intramolecular cyclization reaction of the PAN-based fiber and increases the oxygen binding amount to obtain a flameproof fiber. In this flameproofing treatment step, the PAN-based fiber is preferably stretched at a draw ratio of 0.90 to 1.20.

<Carbonization>

The flameproof fiber manufactured through the flameproofing treatment step is subsequently sent to a carbonization treatment step, and is carbonized by being heated in an inert atmosphere, and a carbon fiber is manufactured.

In order to obtain a carbon fiber having higher performance, it is preferable to employ a two-stage carbonization treatment step for performing low temperature carbonization at 300 to 1000°C and then performing high temperature carbonization at 1000 to 2000°C. By employing a multi-stage carbonization treatment step, a carbon fiber having a denser internal structure can be obtained. When a carbon fiber is required to have a higher elastic modulus, a three or more-stage carbonization step is employed, and a carbonization treatment can be performed at a high temperature having a maximum temperature of 2000 to 3000°C. Thereafter, this carbon fiber is subjected to a plasma surface treatment, and the surface-treated carbon fiber of the present invention is manufactured.

<Surface treatment>

The carbon fiber manufactured through the above carbonization treatment step is subjected to a surface treatment. The surface treatment is performed by bringing a reactive gas which has been made into a plasma into contact with a surface of the carbon fiber continuously conveyed. A predetermined functional group is introduced into the surface of the carbon fiber due to this surface treatment, and the surface-treated carbon fiber of the present invention is manufactured.

Specifically, the surface treatment is performed by applying a voltage to a reactive gas to make the reactive gas into a plasma, and bringing the reactive gas which has been made into a plasma into contact with a surface of a carbon fiber to be treated while the carbon fiber is conveyed.

The reactive gas which has been made into a plasma includes a high energy electron, and includes various atomic ions and molecular ions generated by collision with the electron, various active species having a ground energy state or an excited energy state, atoms, molecules, and the like in a large amount. Therefore, by bringing the carbon fiber into contact with the reactive gas which has been made into a plasma, an action such as etching, chemical modification, bulk surface polymerization, or plasma polymerization is exerted. It is estimated that a treatment of the carbon fiber with the reactive gas which has been made into a plasma causes a chemical reaction on a surface of the carbon fiber to proceed because a particle of the plasma collides with the surface of the carbon fiber, and an active energy required for various chemical reactions or the like is supplied due to an internal energy thereof. As a result, a chemical composition only of the surface of the carbon fiber can be changed, and various functional groups can be introduced.

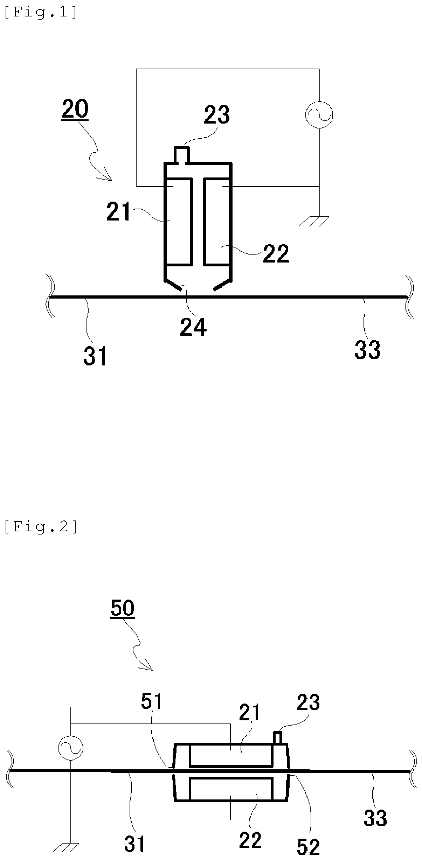

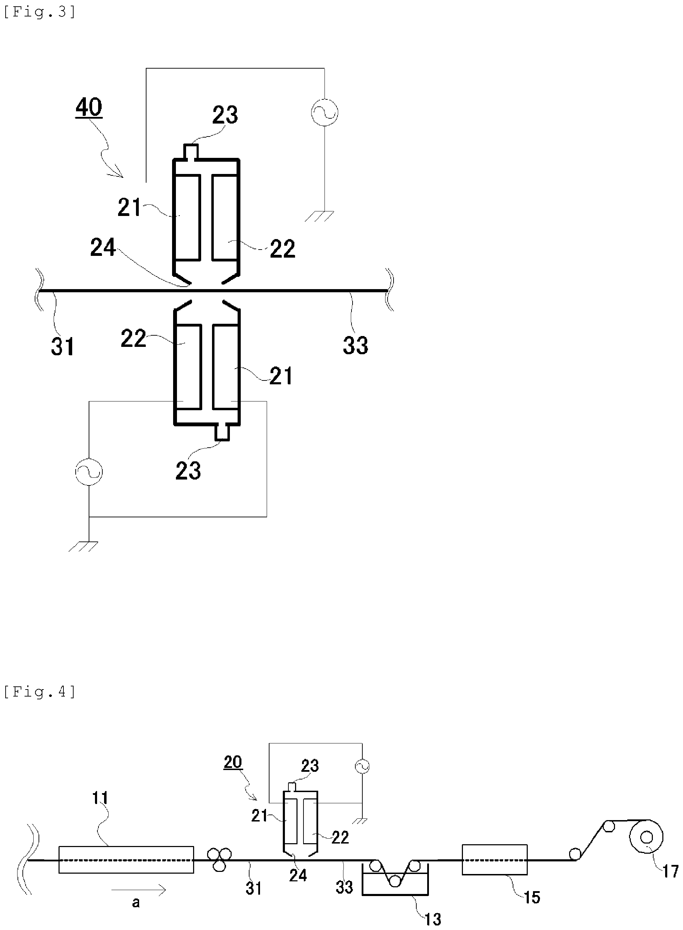

Fig. 4 is an explanatory diagram illustrating a process for manufacturing the surface-treated carbon fiber of the present invention. In Fig. 4, the sign 11 represents a carbonization furnace, and the sign 31 represents a carbon fiber. The sign 20 represents a surface treatment apparatus, details of which are illustrated in Fig. 1. The surface treatment apparatus 20 includes a pair of electrodes 21 and 22 therein. The sign 23 represents a reactive gas inlet. A reactive gas introduced from the reactive gas inlet 23 is made into a plasma by discharge between the pair of electrodes 21 and 22. A surface treatment is performed by spraying a discharge plasma obtained by applying a high frequency electric field while a treatment gas is introduced between a voltage application electrode and a ground electrode to a treatment object disposed outside a discharge space under a pressure near atmospheric pressure. The reactive gas which has been made into a plasma is extracted from a spray port 24, and is brought into contact with a surface of the carbon fiber 31. That is, the surface treatment apparatus 20 performs a surface treatment using a remote plasma. The sign 33 represents a surface-treated carbon fiber obtained by surface-treating the carbon fiber 31. The sign 13 represents a sizing agent bath, and the sign 15 represents a dryer of a sizing agent. The sign 17 represents a winding roll of the surface-treated carbon fiber 33.

The carbon fiber 31 extracted from the carbonization furnace 11 is conveyed in a direction of the arrow a in Fig. 4. In the spray outlet 24 portion of the surface treatment apparatus 20, the carbon fiber 31 is surface-treated by being in contact with the reactive gas which has been made into a plasma, extracted from the spray outlet 24 portion, and becomes the surface-treated carbon fiber 33. The surface-treated carbon fiber 33 is impregnated with a sizing agent in the sizing agent bath 13, is then dried with the dryer 15, and is wound around the winding roll 17.

The surface treatment apparatus includes parallel electrode plates with a gap of a few mm therebetween in a housing, and can generate a plasma by initiating glow discharge by applying a DC or AC voltage of several hundreds to several thousands V to the electrode plates under a low gas pressure. Therefore, by disposing the carbon fiber between the parallel electrode plates or below the parallel electrode plates, introducing the reactive gas into a plasma treatment portion (between the electrodes), and applying an appropriate voltage to the electrode plates, a plasma treatment can be performed in an atmosphere of the reactive gas.

As the surface treatment apparatus 20, apparatuses illustrated in Figs. 2 and 3 can be also used in addition to the apparatus illustrated in Fig. 1.

Fig. 2 is an explanatory diagram illustrating another structure of the surface treatment apparatus. In Fig. 2, the sign 50 represents a surface treatment apparatus. The surface treatment apparatus 50 includes a pair of electrodes 21 and 22 therein. The sign 23 represents a reactive gas inlet. A reactive gas introduced from the reactive gas inlet 23 is made into a plasma by discharge between the pair of electrodes 21 and 22. The reactive gas which has been made into a plasma is brought into contact with a surface of the carbon fiber 31 introduced from a fiber inlet 51, and is surface-treated. The carbon fiber 33 which has been subjected to the surface treatment is extracted to the outside of the surface treatment apparatus 50 from a fiber outlet 52.

Fig. 3 is an explanatory diagram illustrating still another structure of the surface treatment apparatus. In Fig. 3, the sign 40 represents a surface treatment apparatus. In the surface treatment apparatus 40, the two surface treatment apparatuses 20 illustrated in Fig. 1 are disposed with a gap of a predetermined distance therebetween such that the spray ports 24 thereof face each other. The carbon fiber 31 is conveyed between the two surface treatment apparatuses, and is brought into contact with the reactive gas which has been made into a plasma.

The carbon fiber 31 is preferably conveyed by being formed into a tape shape having a width of 30 mm or less and a thickness of 5 mm or less, and is more preferably conveyed by being formed into a tape shape having a width of 25 mm or less and a thickness of 1 mm or less. The carbon fiber 31 is preferably surface-treated continuously in view of a manufacturing efficiency.

When the carbon fiber has a discontinuous form such as a short fiber, the carbon fiber is preferably conveyed continuously by being placed on a conveyor or the like.

The reactive gas contains an oxygen atom in a molecular structure thereof. Examples thereof include oxygen, carbon monoxide, and carbon dioxide. These reactive gases are preferably used as a mixture with nitrogen, ammonia, hydrogen, argon, xenon, or the like. A mixed gas of nitrogen and oxygen is preferable. A mixing ratio between nitrogen and oxygen is preferably from 79:21 to 99.95:0.05, and more preferably from 90:10 to 99.95:0.05.

A plasma output or a linear velocity in the surface treatment step is not particularly limited. However, when a normal pressure plasma is used, a ratio of output/linear velocity is usually from 300 to 20000 [W/(m/min)]. When the ratio is less than 300 [W/(m/min)], a sufficient surface treatment effect cannot be obtained. When the ratio is more than 20000 [W/(m/min)], a carbon fiber is easily damaged by discharge.

Preferable contact time between the reactive gas which has been made into a plasma and a surface of the carbon fiber is not particularly limited because depending on a linear velocity, a width of an electrode, and a distance between the surface of the carbon fiber and the electrode, but is generally from 0.05 to 5 seconds. Note that the contact time means time required for passing of the carbon fiber continuously conveyed through the spray port 24 portion.

An opening of the spray port 24 has a size of 0.1 to 3.0 mm, preferably of 0.5 to 1.5 mm in a fiber conveying direction. The shortest distance between the electrodes 21 and 22 and the surface of the carbon fiber is from 1 to 20 mm, and is preferably from 3 to 10 mm.

The pressure during the surface treatment is preferably a normal pressure. However, by disposing a treatment chamber in the spray port 24 portion of the surface treatment apparatus 20, the surface treatment may be performed while the pressure in the treatment chamber is a predetermined pressure. In such a case, by disposing a carbon fiber bundle port having a sealing portion in the treatment chamber so as to maintain the pressure in the apparatus, the carbon fiber may be introduced into the treatment chamber through the sealing portion.

Note that a conventionally known method can be employed for each step of spinning a PAN-based fiber as a precursor, flameproofing, carbonization, and a sizing treatment. In addition, another known step may be present between the steps. However, after the surface treatment, when a treatment using a chemical is performed as a post-treatment or when a treatment to impart a high temperature is performed in an active atmosphere, it may be difficult to achieve the object of the present invention.

<Cleaning treatment>

The method for manufacturing a surface-treated carbon fiber according to the present invention preferably includes a cleaning treatment step before the surface treatment step of a carbon fiber. The cleaning treatment step is performed by spraying a non-reactive gas which has been made into a plasma onto a surface of a carbon fiber continuously conveyed.

The non-reactive gas contains no oxygen atom in a molecular structure thereof. Examples thereof include nitrogen, argon, and helium.

The cleaning treatment step uses a plasma output, a linear velocity, contact time, and a surface treatment apparatus similar to the above surface treatment step.

**Industrial applicability**

The method for manufacturing a carbon fiber according to the present invention has a high productivity because a washing step or a drying step is not required after the surface treatment of a carbon fiber. In addition, the method for manufacturing a carbon fiber according to the present invention has a higher degree of freedom in a form of a carbon fiber to be treated than a wet oxidation method. That is, not only a long fiber but also a short fiber can be subjected to a surface treatment continuously. Therefore, even a recycled carbon fiber can be subjected to a surface treatment industrially.

**Examples**

Hereinafter, the present invention will be described specifically based on Examples. Physical properties of fibers in Examples and Comparative Examples were evaluated by the following methods.

[1] Strand strength, elastic modulus

The tensile strength of a cured epoxy resin-impregnated strand and the tensile elastic modulus thereof were measured according to JIS R 7608.

[2] Surface oxygen concentration (O/C)

The surface oxygen concentration (O/C) of a carbon fiber was determined by XPS(ESCA) according to the following procedure. ESCA JPS-9000MX manufactured by JEOL Ltd. was used for measurement.

A carbon fiber was cut, and was extended and arranged on a stainless steel sample supporting table. A photoelectron escape angle was set to 90 degrees, and the inside of a sample chamber was maintained at a vacuum degree of $1 \times 10^{-6}$ Pa using $MgK\alpha$ as an X-ray source. First, a binding energy value B.E. of a main peak of C1s was set to 284.6 eV as correction of a peak in charging during measurement. An O1s peak area was determined by drawing a linear base line in a range of 528 to 540 eV. A C1s peak area was determined by drawing a linear base line in a range of 282 to 292 eV. The surface oxygen concentration (O/C) on a surface of a carbon fiber was calculated as a ratio between the O1s peak area and the C1s peak area.

[3] Carboxyl group ratio

1.0 g of a carbon fiber was weighed. A gas generated from a sample by raising the temperature using a thermal analysis heating apparatus (STA 449 F1 manufactured by Netzsch Japan K.K.) was introduced into a mass spectrometer (QMS 403 D manufactured by Netzsch Japan K.K.) on-line, and was subjected to mass spectrometry.

Helium was used as a carrier gas, and a functional group on a surface of the carbon fiber was subjected to pyrolysis gas analysis at a temperature-rising rate of 30°C/min.

Using calcium oxalate $\cdot H_2O$, the amounts of $CO_2$, CO, and $H_2O$ theoretically generated from the amount of a sample were compared with peak areas of $CO_2$ (m/z44), $H_2O$ (m/z18), and CO (m/z28) actually generated, respectively, and a calibration curve was prepared. In quantification of a functional group, the total amount of $CO_2$ (m/z44) generated at 100 to 800°C was assumed to be the total amount of functional groups. The total amount of $CO_2$ (m/z44) generated at 100 to 400°C was assumed to be the amount of a carboxyl group.

A value of (the amount of carboxyl group/the total amount of functional groups) was calculated as a carboxyl group.

A value of [1 - (the amount of carboxyl group/the total amount of functional groups)] was calculated as an acid anhydride.

[4] Evaluation for adhesive property of carbon fiber

Resin particles (droplets) were attached to a filament, and the droplets were fixed. Thereafter, a pull-out test of a fiber was performed using a composite material interface characteristic evaluation apparatus Model HM410, and interfacial adhesive property was thereby evaluated.

The droplets were manufactured on the filament using a two-liquid type normal temperature curing epoxy resin (epoxy resin 105 and curing agent 206 manufactured by WEST SYSTEM Inc.) as a resin.

In order to completely cure the resin, the resin was post-cured at 80°C for one hour, and then measurement was performed.

An interfacial shear strength $\tau$ was calculated using the following formula (1) while a maximum pull-out load obtained was represented by F, an embedding length was represented by L, and a fiber diameter was represented by D.

$$\tau = F/(\pi \times D \times L) \quad \text{formula (1)}$$

[5] Surface friction force ratio

A change in the shape of a surface of a carbon fiber due to the surface treatment was observed and a change in irregularities on the surface of the carbon fiber was measured using a friction force microscope (FFM) as one of standard measurement modes for SPM under the following conditions. A friction force distribution was imaged at a nanoscale from a twisting displacement when scanning was performed in a direction in which a cantilever was twisted. By assuming a surface friction force of a non-surface-treated carbon fiber as 1, a ratio of a surface friction force of a surface-treated carbon fiber thereto was calculated.

(Measurement apparatus and measurement condition)

Apparatus: scanning probe microscope E-sweep manufactured by Hitachi High-Tech Science Ltd.

Mode: Friction force measurement (FFM mode/Friction Force Microscope)
Cantilever: SN-AF01S-NT (made of $Si_3N_4$)
Spring constant : 0.02 N/m (f = 11 kHz)

[6] Evaluation for tensile characteristic of injection molded article

A carbon fiber and Nylon 12 as a thermoplastic resin were kneaded using an extrusion molding machine to prepare a resin kneaded pellet (R.C. 80%, Vf: 12.5%). A test piece (No. 1 dumbbell) was prepared with this resin kneaded pellet using an injection molding machine, and a tensile characteristic thereof was evaluated according to JIS K 7164.

[7] Measurement of remaining fiber length distribution of injection molded article

A remaining fiber length distribution in an injection molded article in the present invention is a value calculated by subjecting the injection molded article to an ashing treatment in an inert atmosphere at 600°C for 30 minutes, taking out a fibrous filler in the molded article, putting the fibrous filler which had been taken out in water, dispersing the fibrous filler uniformly using an ultrasonic washing machine, taking an sample of the resulting product into a petri dish and then drying the sample, taking a photo of the fibrous filler in the petri dish, and measuring lengths of about 1000 filaments. In the remaining fiber length distribution, the fiber length was plotted in the horizontal axis, a cumulative frequency was plotted in the vertical axis, and calculation was performed by assuming that a fiber length in 10% from the shortest fiber length was D10, a fiber length in 50% from the shortest fiber length was D50, and a fiber length in 90% from the shortest fiber length was D90 .

(Example 1)

A PAN fiber strand (filament fineness: 1.05 [dtex], filament number: 24000) as a precursor was subjected to a flameproofing treatment in air at 250 to 270°C until the fiber specific gravity became 1.34 to 1.36. Subsequently, the PAN fiber strand was subjected to low temperature carbonization in a nitrogen atmosphere at 300 to 650°C. Thereafter, the PAN fiber strand was subjected to high temperature carbonization in a nitrogen atmosphere at 1300°C to obtain a carbon fiber strand. As for resin-impregnated strand physical properties of the resulting carbon fiber strand, the strength was 4000 [MPa], and the elastic modulus was 240 [GPa]. A surface of this carbon fiber was subjected to a plasma surface treatment using the surface treatment apparatus (the length of an opening of a spray port in a fiber conveying direction: 1.0 [mm], the width of the opening: 400 [mm], the shortest distance between the opening of the spray port and the carbon fiber: 3.0 [mm]) illustrated in Fig. 1 in an atmosphere having a gas composition of nitrogen:oxygen = 99.8:0.2 under conditions of a normal pressure, an output of 1.5 [kW], a peak voltage width V (p-p) of 8.9 [kVp-p], a linear velocity (fiber conveying speed) of 1 [m/min], a gas volume flow rate of 0.1 [m$^3$/min], and a gas flux density of 4.17 [m/s]. Various physical properties of the resulting surface-treated carbon fiber were evaluated by the above methods. As for the remaining fiber length of the carbon fiber contained in the test piece after evaluation for a tensile characteristic of the injection molded article, D50 was 120 [μm], and D90 was 320 [μm]. Other results are shown in Table 1.

(Examples 2-4)

A surface treatment was performed by a method similar to Example 1 by changing the linear velocity or the plasma output to the values shown in Table 1. Various physical properties of the resulting surface-treated carbon fiber are shown in Table 1.

(Examples 5-6)

A surface of a raw carbon fiber after second carbonizing step manufactured by a method similar to Example 1 was subjected to a surface treatment using the surface treatment apparatus (the carbon fiber is conveyed between electrodes having a gap of 3.0 [mm] therebetween) illustrated in Fig. 2 under conditions shown in Table 1. Various physical properties of the resulting surface-treated carbon fiber are shown in Table 1.

(Examples 7-9)

A surface of a raw carbon fiber after second carbonizing step manufactured by a method similar to Example 1 was subjected to a surface treatment using the surface treatment apparatus illustrated in Fig. 3 under conditions shown in Table 1. Various physical properties of the resulting surface-treated carbon fiber are shown in Table 1.

(Example 10)

A surface of a raw carbon fiber after second carbonizing step manufactured by a method similar to Example 1 was subjected to a first plasma surface treatment using the surface treatment apparatus (the shortest distance between the opening of the spray port and the carbon fiber: 3.0 [mm]) illustrated in Fig. 1 in an atmosphere having a gas composition of nitrogen 100% under conditions of a normal pressure, an output of 1.5 [kW], a linear velocity of 1 [m/min], a gas volume flow rate of 0.15 [m$^3$/min], and a gas flux density of 6.25, and was again subjected to a second plasma surface treatment using the surface treatment apparatus (the shortest distance between the opening of the spray port and the carbon fiber: 3.0 [mm]) illustrated in Fig. 1 in an atmosphere having a gas composition of nitrogen:oxygen = 99.8:0.2 under conditions of a normal pressure, an output of 1.5 [kW], a gas volume flow rate of 0.15 [m$^3$/min], and a gas flux density of 6.25. Various physical properties of the resulting surface-treated carbon fiber were evaluated by the above methods, and results thereof are shown in Table 2.

(Example 11-13)

The second plasma surface treatment was performed by a method similar to Example 10 by changing the linear velocity or the plasma output to the values shown in Table 2. Various physical properties of the resulting surface-treated carbon fiber are shown in Table 2.

(Example 14-16)

The second plasma surface treatment was performed using the surface treatment apparatus illustrated in Fig. 3 by a method similar to Example 10 by changing the linear velocity or the plasma output to the values shown in Table 2. Various physical properties of the resulting surface-treated carbon fiber are shown in Table 2.

(Comparative Examples 1-3)

A surface of a raw carbon fiber after second carbonizing step manufactured by a method similar to Example 1 was subjected to a surface treatment using the surface treatment apparatus illustrated in Fig. 1 under conditions shown in Table 3. Various physical properties of the resulting surface-treated carbon fiber are shown in Table 3.

In Comparative Examples 1 and 2, the output/linear velocity was small, and the surface treatment was not performed sufficiently. Therefore, the surface oxygen concentration (O/C), the existence amount of a carboxyl group, the surface friction force, and the interfacial shear strength were small. As a result, the carbon fiber was broken during preparation of a pellet, and the length of the remaining fiber was short. In addition, the tensile characteristic during injection molding was low.

In Comparative Example 3, the output/linear velocity was large, and the surface treatment was performed excessively. Therefore, the surface friction force was extremely large. As a result, the tensile characteristic during injection molding was low.

(Comparative Example 4)

A PAN fiber strand (filament fineness: 1.05 [dtex], filament number: 24000) as a precursor was subjected to a flameproofing treatment in air at 250 to 270°C until the fiber specific gravity became 1.34 to 1.36. Subsequently, the PAN fiber strand was subjected to low temperature carbonization in a nitrogen gas atmosphere at 300 to 650°C. Thereafter, the PAN fiber strand was subjected to high temperature carbonization in a nitrogen atmosphere at 1300°C to obtain a carbon fiber strand. A surface of this carbon fiber strand was subjected to a surface treatment using ammonium nitrate under an electrolytic oxidation condition shown in Table 4. Various physical properties of the resulting surface-treated carbon fiber were evaluated by a method similar to Example 1, and obtained results are shown in Table 4.

(Comparative Examples 5-8)

A surface treatment was performed by a method similar to Comparative Example 4 under the conditions shown in Table 4 except that the chemical liquid and the amount of electricity for the surface treatment were changed. Various physical properties of the resulting surface-treated carbon fiber are shown in Table 4.

In Comparative Examples 4 to 8, wet oxidation with a chemical liquid was performed. In the wet oxidation by a chemical liquid, even when the treatment conditions were changed, the existence amount of a carboxyl group could not be increased sufficiently. In addition, the surface friction force and the interfacial shear strength were low. As a result, the carbon fiber was broken during preparation of a pellet, and the length of the remaining fiber was short. In addition, the tensile characteristic during injection molding was low.

[Table 1]

| | example 1 | example 2 | example 3 | example 4 | example 5 | example 6 | example 7 | example 8 | example 9 |
|---|---|---|---|---|---|---|---|---|---|
| whether first plasma treatment has been performed or not | not performed | not performed | not performed | not performed | not performed | not performed | not performed | not performed | not performed |
| linear velocity [m/min.] | 1 | 2 | 3 | 1 | 3 | 1 | 2 | 6 | 3 |
| ratio of mixed gas [$n_2$:$o_2$] | 99.8:0.2 | 99.8:0.2 | 99.8:0.2 | 99.8:0.2 | 95.0:5.0 | 95.0:5.0 | 99.8:0.2 | 99.8:0.2 | 99.8:0.2 |
| plasma output [kw] | 1.5 | 1.5 | 1.5 | 3 | 3 | 2 | 2 (upper surface 1kw) (lower surface 1kw) | 6 (upper surface 3kw) (lower surface 3kw) | 6 (upper surface 3kw) (lower surface 3kw) |
| ratio between output and linear velocity [w/(m/min)] | 1500 | 750 | 500 | 3000 | 1000 | 2000 | 1000 | 1000 | 2000 |
| xps o/c [%] | 15 | 10 | 7 | 18 | 9 | 15 | 9 | 11 | 16 |
| carboxyl group ratio [%] | 62 | 60 | 58 | 65 | 60 | 64 | 55 | 53 | 55 |
| friction force ratio by spm [-] | 1.45 | 1.35 | 1.28 | 1.53 | 1.33 | 1.45 | 1.33 | 1.38 | 1.48 |
| strand strength [mpa] | 4030 | 4020 | 4000 | 4010 | 4030 | 4000 | 4010 | 4020 | 4000 |
| injection molding tensile strength [mpa] | 122 | 120 | 115 | 125 | 117 | 122 | 117 | 121 | 123 |
| injection molding tensile elastic modulus [gpa] | 9.5 | 9.5 | 9.5 | 9.5 | 9.5 | 9.5 | 9.5 | 9.5 | 9.5 |
| remaining fiber length d50 [$\mu$m] | 120 | 130 | 120 | 150 | 130 | 120 | 120 | 120 | 130 |
| remaining fiber length d90 [$\mu$m] | 320 | 320 | 300 | 340 | 310 | 320 | 320 | 320 | 330 |

(continued)

| | example 1 | example 2 | example 3 | example 4 | example 5 | example 6 | example 7 | example 8 | example 9 |
|---|---|---|---|---|---|---|---|---|---|
| interfacial shear strength [mpa] | 65 | 63 | 60 | 70 | 61 | 63 | 61 | 63 | 66 |

[Table 2]

| | Example 10 | Example 11 | Example 12 | Example 13 | Example 14 | Example 15 | Example 16 |
|---|---|---|---|---|---|---|---|
| whether first plasma treatment has been performed or not | performed | performed | performed | performed | performed | performed | performed |
| linear velocity [m/min.] | 1 | 2 | 3 | 1 | 2 | 6 | 3 |
| ratio of mixed gas [$N_2$:$O_2$] | 99.8:0.2 | 99.8:0.2 | 99.8:0.2 | 99.8:0.2 | 99.8:0.2 | 99.8:0.2 | 99.8:0.2 |
| plasma output [kW] | 1.5 | 1.5 | 1.5 | 3 | 2 (upper surface 1kW)(lower surface 1kW) | 6 (upper surface 3kW)(lower surface 3kW) | 6 (upper surface 3kW)(lower surface 3kW) |
| ratio between output and linear velocity [W/(m/min)] | 1500 | 750 | 500 | 3000 | 1000 | 1000 | 2000 |
| XPS O/C [%] | 20 | 16 | 13 | 24 | 14 | 13 | 18 |
| carboxyl group ratio [%] | 66 | 63 | 59 | 68 | 60 | 57 | 64 |
| friction force ratio by SPM [-] | 1.55 | 1.45 | 1.35 | 1.6 | 1.375 | 1.35 | 1.5 |
| strand strength [MPa] | 4020 | 4000 | 4040 | 4010 | 4000 | 4010 | 4000 |
| injection molding tensile strength [MPa] | 127 | 125 | 122 | 130 | 125 | 125 | 127 |
| injection molding tensile elastic modulus [GPa] | 9.5 | 9.5 | 9.5 | 9.6 | 9.5 | 9.5 | 9.5 |
| remaining fiber length D50 [μm] | 130 | 130 | 120 | 140 | 140 | 140 | 140 |
| remaining fiber length D90 [μm] | 350 | 340 | 320 | 360 | 340 | 340 | 340 |

(continued)

|  | Example 10 | Example 11 | Example 12 | Example 13 | Example 14 | Example 15 | Example 16 |
|---|---|---|---|---|---|---|---|
| interfacial shear strength [MPa] | 65 | 64 | 61 | 70 | 62 | 63 | 67 |

[Table 3]

|  | Comparative Example 1 | Comparative Example 2 | Comparative Example 3 |
|---|---|---|---|
| linear velocity [m/min.] | 1 | 1 | 0.1 |
| ratio of mixed gas [$N_2$:$O_2$] | 99.8:0.2 | 99.0:1.0 | 99.0:1.0 |
| plasma output [kW] | 0.4 | 0.4 | 3 |
| ratio between output and linear velocity [W/(m/min)] | 400 | 400 | 30000 |
| XPS O/C [%] | 3 | 6 | 26 |
| carboxyl group ratio [%] | 40 | 40 | 45 |
| friction force ratio by SPM [-] | 1.025 | 1.15 | 1.8 |
| strand strength [MPa] | 4010 | 4000 | 4020 |
| injection molding tensile strength [MPa] | 100 | 110 | 110 |
| injection molding tensile elastic modulus [GPa] | 9 | 9.1 | 9.2 |
| remaining fiber length D50 [μm] | 110 | 120 | 120 |
| remaining fiber length D90 [μm] | 260 | 300 | 300 |
| interfacial shear strength [MPa] | 25 | 42 | 55 |

[Table 4]

|  | Comparative Example 4 | Comparative Example 5 | Comparative Example 6 | Comparative Example 7 | Comparative Example 8 |
|---|---|---|---|---|---|
| linear velocity [m/min.] | 2 | 2 | 2 | 2 | 2 |
| treatment chemical liquid | ammonium nitrate | ammonium nitrate | ammonium hydrogen carbonate | ammonium hydrogen carbonate | ammonium nitrate |
| concentration of chemical liquid [mol/L] | 1.0 | 1.0 | 1.0 | 1.0 | 1.0 |
| electric treatment amount [C] | 10 | 50 | 20 | 40 | 100 |
| XPS O/C [%] | 10 | 30 | 9 | 18 | 30 |
| carboxyl group ratio [%] | 30 | 35 | 30 | 35 | 30 |

(continued)

| | Comparative Example 4 | Comparative Example 5 | Comparative Example 6 | Comparative Example 7 | Comparative Example 8 |
|---|---|---|---|---|---|
| friction force ratio by SPM [-] | 1.23 | 1.18 | 1.23 | 1.15 | 1.08 |
| strand strength [MPa] | 4000 | 4010 | 4010 | 4010 | 4020 |
| injection molding tensile strength [MPa] | 110 | 100 | 110 | 115 | 105 |
| injection molding tensile elastic modulus [GPa] | 9 | 8.8 | 9.3 | 9.3 | 9.1 |
| remaining fiber length D50 [$\mu$m] | 120 | 110 | 130 | 120 | 110 |
| remaining fiber length D90 [$\mu$m] | 290 | 270 | 280 | 300 | 270 |
| interfacial shear strength [MPa] | 48 | 51 | 46 | 50 | 48 |

**Reference Signs List**

| 11 | carbonization furnace |
|---|---|
| 13 | sizing agent bath |
| 15 | dryer |
| 17 | winding roll |
| 20, 40, 50 | surface treatment apparatus |
| 21, 22 | electrode |
| 23 | reactive gas inlet |
| 24 | spray port |
| 31 | carbon fiber |
| 33 | surface-treated carbon fiber |
| 51 | fiber inlet |
| 52 | fiber outlet |

**Claims**

1. A plasma surface-treated carbon fiber comprising carboxyl groups introduced into the surface of the carbon fiber, wherein a mole ratio between a carboxyl group and an acid anhydride measured by pyrolysis gas analysis as measured according to the description is from 50:50 to 70:30, and a surface oxygen concentration (O/C) measured by X-ray photoelectron spectroscopy as measured according to the description is from 0.05 to 0.28.

2. The plasma surface-treated carbon fiber according to claim 1, wherein a surface friction force measured by scanning probe microscope (SPM) analysis as measured according to the description is from 1.25 to 1.75 times that of a non-surface-treated carbon fiber.

3. A plasma surface-treated carbon fiber strand obtained by bundling the 1000 to 100000 surface-treated carbon fiber filaments according to claim 1.

4. A method for manufacturing the plasma surface-treated carbon fiber according to claim 1, comprising either:

(A) spraying a reactive gas which has been made into a plasma onto a surface of a carbon fiber continuously conveyed to introduce a functional group into the surface of the carbon fiber; or

(B) a first plasma treatment for spraying a non-reactive gas which has been made into a plasma onto a surface of a carbon fiber continuously conveyed to clean the surface of the carbon fiber; and a second plasma treatment for spraying a reactive gas which has been made into a plasma onto the surface of the carbon fiber which has been subjected to the first plasma treatment and which is continuously conveyed to introduce a functional group into the surface of the carbon fiber,

wherein the reactive gas defined (A) or (B) is a mixed gas of nitrogen and oxygen and a mixing ratio of the reactive gas between nitrogen and oxygen is from 90:10 to 99.95:0.05.

5. A method for manufacturing the plasma surface-treated carbon fiber according to claim 4, comprising spraying a reactive gas which has been made into a plasma onto a surface of a carbon fiber continuously conveyed to introduce a functional group into the surface of the carbon fiber.

6. A method for manufacturing the plasma surface-treated carbon fiber according to claim 4, comprising:

a first plasma treatment for spraying a non-reactive gas which has been made into a plasma onto a surface of a carbon fiber continuously conveyed to clean the surface of the carbon fiber; and

a second plasma treatment for spraying a reactive gas which has been made into a plasma onto the surface of the carbon fiber which has been subjected to the first plasma treatment and which is continuously conveyed to introduce a functional group into the surface of the carbon fiber.

7. The method for manufacturing a plasma surface-treated carbon fiber according to claim 6, wherein the non-reactive gas is argon or helium.

**Patentansprüche**

1. Plasma-oberflächenbehandelte Kohlenstofffaser umfassend Carboxylgruppen, die in die Oberfläche der Kohlenstofffaser eingeführt sind, wobei ein Molverhältnis zwischen einer Carboxylgruppe und einem Säureanhydrid, gemessen durch Pyrolysegasanalyse wie gemessen gemäß der Beschreibung, von 50:50 bis 70:30 beträgt und eine Oberflächensauerstoffkonzentration (O/C), gemessen durch Röntgenphotoelektronenspektroskopie wie gemessen gemäß der Beschreibung, von 0,05 bis 0,28 beträgt.

2. Plasma-oberflächenbehandelte Kohlenstofffaser nach Anspruch 1, wobei eine Oberflächenreibungskraft, gemessen durch Rastersondenmikroskopie(SPM)-Analyse wie gemessen gemäß der Beschreibung, von 1,25- bis 1,75-mal jener einer nicht oberflächenbehandelten Kohlenstofffaser beträgt.

3. Plasma-oberflächenbehandelter Kohlenstofffaserstrang, erhalten durch Bündeln der 1000 bis 100000 oberflächenbehandelten Kohlenstofffaserfilamente nach Anspruch 1.

4. Verfahren zur Herstellung der Plasmaoberflächenbehandelten Kohlenstofffaser nach Anspruch 1, umfassend entweder:

(A) Sprühen eines reaktiven Gases, das zu einem Plasma gemacht worden ist, auf eine Oberfläche einer Kohlenstofffaser, die kontinuierlich zugeführt wird, um eine funktionelle Gruppe in die Oberfläche der Kohlenstofffaser einzuführen; oder

(B) eine erste Plasmabehandlung zum Sprühen eines nichtreaktiven Gases, das zu einem Plasma gemacht worden ist, auf eine Oberfläche einer Kohlenstofffaser, die kontinuierlich zugeführt wird, zum Reinigen der Oberfläche der Kohlenstofffaser; und eine zweite Plasmabehandlung zum Sprühen eines reaktiven Gases, das zu einem Plasma gemacht worden ist, auf die Oberfläche der Kohlenstofffaser, die der ersten Plasmabehandlung unterzogen worden ist und die kontinuierlich zugeführt wird, um eine funktionelle Gruppe in die Oberfläche der Kohlenstofffaser einzuführen,

wobei das reaktive Gas, definiert (A) oder (B), ein Mischgas aus Stickstoff und Sauerstoff ist und ein Mischungsverhältnis des reaktiven Gases zwischen Stickstoff und Sauerstoff von 90:10 bis 99,95:0,05 beträgt.

**5.** Verfahren zur Herstellung der Plasmaoberflächenbehandelten Kohlenstofffaser nach Anspruch 4, umfassend Sprühen eines reaktiven Gases, das zu einem Plasma gemacht worden ist, auf eine Oberfläche einer Kohlenstofffaser, die kontinuierlich zugeführt wird, um eine funktionelle Gruppe in die Oberfläche der Kohlenstofffaser einzuführen.

**6.** Verfahren zur Herstellung der Plasmaoberflächenbehandelten Kohlenstofffaser nach Anspruch 4, umfassend:

eine erste Plasmabehandlung zum Sprühen eines nichtreaktiven Gases, das zu einem Plasma gemacht worden ist, auf eine Oberfläche einer Kohlenstofffaser, die kontinuierlich zugeführt wird, zum Reinigen der Oberfläche der Kohlenstofffaser; und
eine zweite Plasmabehandlung zum Sprühen eines reaktiven Gases, das zu einem Plasma gemacht worden ist, auf die Oberfläche der Kohlenstofffaser, die der ersten Plasmabehandlung unterzogen worden ist und die kontinuierlich zugeführt wird, um eine funktionelle Gruppe in die Oberfläche der Kohlenstofffaser einzuführen.

**7.** Verfahren zur Herstellung einer Plasmaoberflächenbehandelten Kohlenstofffaser nach Anspruch 6, wobei das nichtreaktive Gas Argon oder Helium ist.


**Revendications**

**1.** Fibre de carbone traitée en surface par plasma, comprenant des groupes carboxyles introduits dans la surface de la fibre de carbone, un rapport molaire entre un groupe carboxyle et un anhydride acide, mesuré par analyse des gaz de pyrolyse conformément à la description, étant compris entre 50:50 et 70:30, et une concentration d'oxygène en surface (O/C), mesurée par spectroscopie de photoélectrons à rayons X conformément à la description, étant comprise entre 0,05 et 0,28.

**2.** Fibre de carbone traitée en surface par plasma selon la revendication 1, la force de frottement de surface mesurée par analyse au microscope à sonde à balayage (SPM) selon la description étant de 1,25 à 1,75 fois celle d'une fibre de carbone non traitée en surface par plasma.

**3.** Fibre de carbone traitée en surface par plasma, obtenu en regroupant les 1000 à 100000 filaments de fibre de carbone traitée en surface selon la revendication 1.

**4.** Procédé de fabrication de la fibre de carbone traitée en surface par plasma selon la revendication 1, comprenant :

(A) la pulvérisation d'un gaz réactif qui a été transformé en plasma sur une surface d'une fibre de carbone transportée en continu pour introduire un groupe fonctionnel dans la surface de la fibre de carbone ; ou
(B) un premier traitement au plasma pour pulvériser un gaz non réactif qui a été transformé en plasma sur une surface de fibre de carbone transportée en continu pour nettoyer la surface de la fibre de carbone ; et un second traitement au plasma pour pulvériser un gaz réactif qui a été transformé en plasma sur la surface de la fibre de carbone qui a été soumise au premier traitement au plasma et qui est transportée en continu pour introduire un groupe fonctionnel dans la surface de la fibre de carbone,

le gaz réactif défini (A) ou (B) étant un gaz mélangé d'azote et d'oxygène et un rapport de mélange du gaz réactif entre l'azote et l'oxygène étant compris entre 90:10 et 99,95:0,05.

**5.** Procédé de fabrication de la fibre de carbone traitée en surface par plasma selon la revendication 4, comprenant la pulvérisation d'un gaz réactif qui a été transformé en plasma sur une surface d'une fibre de carbone transportée en continu pour introduire un groupe fonctionnel dans la surface de la fibre de carbone.

**6.** Procédé de fabrication de la fibre de carbone traitée en surface par plasma selon la revendication 4, comprenant :

un premier traitement au plasma pour pulvériser un gaz non réactif qui a été transformé en plasma sur une surface d'une fibre de carbone transportée en continu pour nettoyer la surface de la fibre de carbone ; et
un second traitement au plasma pour pulvériser un gaz réactif qui a été transformé en plasma sur la surface de la fibre de carbone qui a été soumise au premier traitement au plasma et qui est transportée en continu pour introduire un groupe fonctionnel dans la surface de la fibre de carbone.

**7.** Procédé de fabrication d'une fibre de carbone traitée en surface par plasma selon la revendication 6, le gaz non réactif étant de l'argon ou de l'hélium.

[Fig.1]

[Fig.2]

[Fig.3]

[Fig.4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008248424 A
- JP 2007224459 A
- JP S451287 A
- WO 2014142109 A1
- EP 2053078 A1
- US 20130048485 A1
- WO 20140081015 A1

**Non-patent literature cited in the description**

- *Surface,* vol. 28 (12977-987
- *Carbon,* 1988, vol. 26, 389